(19) **Europäisches Patentamt / European Patent Office / Office européen des brevets**

(11) **EP 4 488 051 A1**

(12) **EUROPEAN PATENT APPLICATION**

(43) Date of publication:
**08.01.2025 Bulletin 2025/02**

(21) Application number: **24186478.4**

(22) Date of filing: **04.07.2024**

(51) International Patent Classification (IPC):
**B32B 3/26** $^{(2006.01)}$   **B32B 7/12** $^{(2006.01)}$
**B32B 27/08** $^{(2006.01)}$   **B32B 27/30** $^{(2006.01)}$
**B32B 27/32** $^{(2006.01)}$   **B65D 65/40** $^{(2006.01)}$

(52) Cooperative Patent Classification (CPC):
**B32B 27/32; B32B 3/266; B32B 7/12; B32B 27/08; B32B 27/306; B65D 65/40;** B32B 2255/10; B32B 2255/205; B32B 2307/7244; B32B 2439/70

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.07.2023 IT 202300014199**

(71) Applicant: **M.G. Lavorazione Materie Plastiche S.p.A.**
**36050 Quinto Vicentino, Frazione Lanzè (IT)**

(72) Inventors:
• **Detassis, Michele**
  **Trento (Tn) (IT)**
• **Magrin, Filippo**
  **36050 Quinto Vicentino (Vi) (IT)**

(74) Representative: **Petraz, Davide Luigi et al**
**GLP S.r.l**
**Viale Europa Unita, 171**
**33100 Udine (IT)**

(54) **BARRIER FILM AND PACKAGE FOR FOOD PRODUCTS AND METHOD FOR PRODUCING SAID BARRIER FILM**

(57)   A polyolefin-based multilayer barrier film comprises one or more polyolefin layers combined with at least one barrier layer, at least said barrier layer having a plurality of through holes. The film can be used coupled to other films in order to create a medium gas barrier laminate, useful for the production of packages or packaging, for example for the food industry.

fig. 6

EP 4 488 051 A1

**Description**

FIELD OF THE INVENTION

Some embodiments concern a barrier film and a package for food products, as well as a method for producing the barrier film.

In particular, some embodiments concern a polyolefin-based multilayer barrier film comprising one or more polyolefin layers combined with at least one barrier layer, at least the barrier layer having a plurality of through holes. The film can be used coupled to other films to create a laminate useful for producing packages or packaging, for example for the food industry. The laminate thus created advantageously has medium gas barrier properties.

Other embodiments concern a laminate which has a window on which a closing flap is stably applied, and a package made with this laminate, in particular for use in the food industry.

BACKGROUND OF THE INVENTION

It is known that the packaging of many perishable food products is done using the modified atmosphere packaging (MAP) technique. With this technique, a correct mixture of gas (typically nitrogen, oxygen and carbon dioxide) is formed in the package the moment it is created and hermetically closed. In this way, an atmosphere is created around the product that protects it throughout its residual life, significantly extending its shelf life.

A necessary condition for the success of this technique is that the packaging is barrier, meaning that, by preventing the escape of gases from the package, it allows to maintain the atmosphere created during the packaging step. In this regard, it is therefore essential that the packaging with which the package is made has excellent gas barrier properties.

However, a high barrier is not always the best guarantee to lengthen shelf life. For example, there are products such as fresh pasta, tortellini, gnocchi and more, where the ideal barrier level is medium. In fact, in these products there are still natural reactions in the product after the packaging step that tend to alter the chemical composition of the atmosphere. A medium barrier allows for a certain exchange of gases, thus ensuring the best protective atmosphere is constantly maintained.

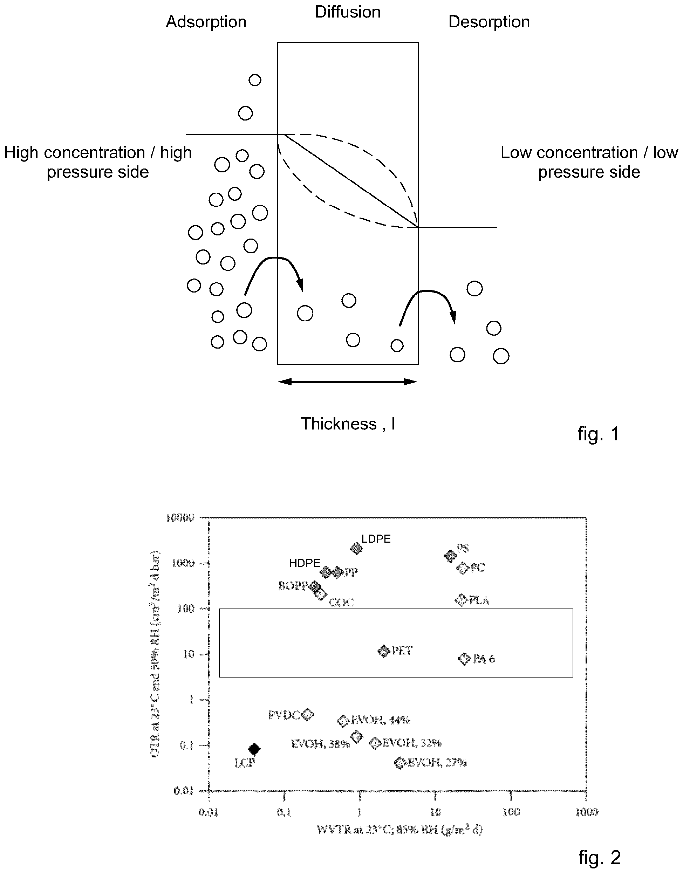

Normally, the gas permeability of a plastic film is defined by the ability of gas molecules to permeate through the film itself. In more detail, the permeation process provides an adsorption step on the first surface, a diffusion step in the film and a desorption step on the second surface (fig. 1).

In analytical terms, according to the well-known Fick's law of diffusion and Henry's law of absorption, permeability (P) is given by:

$$P = DS$$

where D is the diffusion coefficient and S is the solubility. It is practice to indicate permeability through the most convenient transmission coefficient TR, which in the case of oxygen and water vapor is indicated as O2TR and WVTR, respectively, whose units of measurement are $cm^3/m^2$ day atm and $g/m^2$ day atm, respectively.

In numerical terms, a gas (in particular oxygen) barrier can be classified as a very high barrier if it is less than 1 $cm^3/m^2$ day atm; a high barrier if it is between 1 and 2 $cm^3/m^2$ day atm; a medium barrier if it is between 2 and 500 $cm^3/m^2$ day atm and a low barrier if it is greater than 500 $cm^3/m^2$ day atm (Ltd, PCI Films Consulting. Barrier classification of film based on O2TR and WVTR values. 2013).

To date, the plastic films on the market are positioned with respect to the barrier classes as shown in the graph in fig. 2. It can be substantially seen that polyolefin films (PE and PP) are very permeable to gases while films of particular polar molecules are medium barriers (PA, PET) or high or very high barriers (EVOH, PVOH, PVDC).

Numerous attempts have been made to reduce the permeability (in particular by acting to reduce the coefficient D) of a polyolefin plastic film. For example: mixtures with barrier resins (mixtures with EVOH, PA or PVOH, for example) (Polymer Barrier Films. Feldman, D. 9, s.l.: Springer, 2001), additivation of inorganic nano particles (such as montmorillonite, for example) to lengthen the diffusion time through a tortuous path, multiplication of the barrier layer in various micro-nano layers (The Potential Use of Polymer-Clay Nanocomposites in Food Packaging. Ray, Sudip. 4, s.l.: The Berkley Electronic Press, 2006, International Journal of Food Engineering, Vol. 2.).

To date, none of them allow to achieve the typical values of polyamide or polyester film (PA 6 and PET in fig. 2) while simultaneously guaranteeing the mechanical and workability characteristics typical of these two materials.

Historically, some lacquered films can be found on the market as an alternative to polyamide and polyester films. These are made by depositing a thin coating of organic barrier material onto a polymeric film, which is typically a polypropylene (or polyester) film. The material suitable to create a medium barrier level is polyvinylidene chloride (PVDC). However, nowadays this choice tends to be increasingly discarded because this material, since it contains chlorine, potentially has a negative impact on the environment in the long term, and its use is already prohibited by law in several countries.

Recently, biaxially oriented films have been developed that attempt to overcome the banning of PVDC which, while offering a barrier level similar to that of PA or PET film, do not have their same mechanical/workability characteristics, which precludes their use in different applications, such as flow packs for example, due to the possible breakage of the laminate during the formation of the package and/or the life of the product. Moreover, this film, since it is based on a biaxially oriented film, is not easily deformable and therefore cannot be used in thermoforming packaging processes.

To date, therefore, polyamide film remains the medium barrier material of choice for multilayer laminate flow pack type packages, while polyester film is the choice for the packages of the bottom of the thermoformed trays; the corresponding upper covering laminate typically uses, as a barrier material, polyamide or polyester.

Typically, a medium barrier packaging for flow pack bag packages consists of a triplex or duplex laminate. In general, the triplex laminate, in the most frequent case in which it is printed, consists of an external film suitable for printing, a barrier layer and a sealing layer, while if it is anonymous it consists of external layer, barrier layer and sealing layer. In the case of the duplex laminate, used more frequently for packages with no printing, there is a barrier layer and a sealing layer. In the case of printed duplex laminate, there is an external print, barrier layer and sealing layer, or barrier layer, internal print and sealing layer.

In both types, triplex or duplex, the barrier layer is medium barrier, typically a polyamide (PA) film. The sealing layer is typically made with a polyethylene (PE) based film, while in the case of the triplex laminate the printing layer is a polyester (PET) or polypropylene (BOPP) or paper (PAP) film. In summary, therefore, typically the triplex laminate is PET/PA/PE, while the duplex laminate is PA/PE. In some cases, the PE sealing layer is replaced by a PP sealing layer.

Typically, medium barrier packaging for tray packages consists of a thermoformable laminate for producing the tray (bottom) and a laminate for producing the cover (top). Normally, the laminate of the tray is made with a triplex of the PP/PETG/PE type, which contains a polyethylene terephthalate-glycol (PETG) film as a medium barrier film. In the case of the duplex, the laminate is typically made from PETG/PE or PA/PE. While the covering laminate is a PET/PE or PA/PE. Also for this type of packages, the PE sealing layer can be replaced by a PP sealing layer.

It is therefore completely evident that the package made in this way, although having many positive aspects, since it combines heterogeneous materials is unfortunately very difficult to recycle. (Multilayer Packaging in Circular Economy. Schmidt, Jannick. 14, s.l.: MDPI, 2022, Polymers, p. 1825).

Over the course of recent years, some ways to overcome this problem have been proposed (Recycling of Polymer-based Multilayer Packaging: A Review. Kaiser, Katharina. s.l.: MDPI, 2018, Recycling, Vol. 3, p. 1). In particular, following two different approaches: the "separation" of the multilayer components and the "compatibilization" of the multilayer components.

With regard to the separation approach, we include two variants.

The first, disclosed for example in documents US5278282A, EP0644230, EP1311599, outlines several variants of the so-called "selective dissolution-reprecipitation" technique. With this technique, very pure final polymers are obtained that are not affected by the heterogeneity of the starting materials. All these methods, while offering several benefits, have the main disadvantage of requiring a lot of energy and leaving, after processing, a mixed polymeric residue of little commercial value.

The second, described for example in documents US5506036, EP0934160, EP0320757, is based on the "delamination" process. In this process, the delamination is induced physically by the dissolution of macromolecules, and mechanically or chemically by the decomposition of an interface or by the reaction at the interface between the layers.

A main aspect of these methods is the fact that different components are difficult to recover if the starting materials consist of different types of laminate and if these consist of film/film-based laminates. In general, therefore, it is a long and expensive process, in particular when aiming for a high quality recycled material.

The technique of compatibilization of the components of the multilayer provides to recycle the laminate without separating its components.

For example, documents DE3938552, DE4223864A1, EP0575855A1 concern the recycling of multilayer laminates consisting of polyamide or polyester and polyolefins. All hinge on the use of a particular compatibilizer to be introduced during the recycling process together with the starting raw materials. In general, however, these methods suffer from the fact that the quantity and type of compatibilizer are determined by the type of starting laminate. However, since in the case of post-consumer recycling (PCR) material, the composition is variable and not known, this technique is difficult to apply.

Recently, a new recycling possibility has been studied: chemical recycling (A review on pyrolysis of plastic waste. Adnisa, Faisal. 115, s.1.: Elsevier, 2016, Energy conversion and management, p. 308.). Through a pyrolysis process, the polymers present in the laminate are decomposed at the molecular level to then be collected separately and used as starting materials for new polymerization processes. Any other inert components present in the laminate, such as aluminum for example, are collected separately and sold to the aluminum industry. This technique has a lot of potential but has the disadvantage of requiring a lot of energy. Furthermore, to date the availability of resins obtained from chemical recycling is very limited and completely insufficient to meet the needs of the packaging market.

To date, in the EU, flexible packaging consisting of heterogeneous material is considered mechanically recyclable if its main component (PE, PP or PO in general) is not less than 90%, as indicated in "Designing for a Circular Economy" by CE-FLEX (Designing for a Circular Economy. CEFLEX. [Online] 06 2020. https://guidelines.ceflex.eu/). In other words, a multilayer laminate or co-extruded polyolefin-based film is considered fully mechanically recyclable if the amount of non-polyolefin materials present in it, that is, typically the inks, printing, adhesive and barrier material or resin, do not exceed 10% by weight of the total weight.

Document US9005514B2 discloses a method for producing a co-extruded barrier film, through a suitable mixture of different grades of EVOH present in the barrier layer. The solution, although it produces a medium barrier film, is not mechanically recyclable since the barrier material exceeds the limit of 10% by weight of the total co-extruded film.

The application WO2016109023 proposes to introduce special compatibilizing resins inside one or more layers of the co-extruded polyolefin film directly in the film production step. Subsequently, the presence of these resins allows to recycle the different materials present throughout the laminate during the recycling step. This method, where the percentage of barrier material is less than 5% by weight of the total packaging material, has the advantage of allowing the packaging thus made to be recycled in the flow of polyolefin materials. Unfortunately, the solution works as long as the presence of the compatibilizer is very high, which makes this alternative very expensive and therefore often impractical.

Document US2017/190144 describes a degassing sheet that provides a stable gas venting operation based on different generation amounts of carbon dioxide gas, and provides a gas venting effect even when the internal pressure of a storage bag is low. This degassing sheet consists of a gas permeable film, in which a fully penetrating or semi-penetrating hole is formed, and a barrier film, provided with an adhesion layer having a glue spread on an internal side, and being disposed in such a way that non-adherent portions, forming a striped pattern, are continuously formed in the adhesion layer of the barrier film, and the non-adherent portions form degassing ports between the gas permeable film, adhered to the adhesion layer, and the barrier film.

Document US2020/122904 describes a vent for a high barrier coffee packaging or bag, comprising a multilayer laminated film comprising a vent having a first passage or breach, a second passage or breach, and a laser-formed channel extending between them. The length and the cross-sectional area of the laser-formed channel are configured to exhaust $CO_2$ at a rate greater than the counterflow diffusion rate for oxygen or water vapor. In this known solution, a main passage is formed as a whole between two environments which is defined by interconnected passages or breaches formed in the common film for the high-barrier packaging of the coffee. The main passage as above is formed overall through three layers, including an internal layer, an intermediate layer and an external layer. There is, in particular, an internal passage or breach that is located in a first lateral position in the internal layer. This internal passage or breach thus forms a channel between an internal wall of the internal layer and an external wall of the intermediate layer. The internal passage or breach is formed in a first lateral position, leading through a channel to a second lateral position where the external passage is positioned. The channel is formed along the surface of the intermediate layer without compromising the external or internal layers. The channel also extends inward. The channel causes the internal layer to bulge in the areas surrounding the channel. This forms an area that allows the gas to extend through the channel from the internal passage or breach to the external passage or breach. The external passage or breach is formed in both the intermediate layer and also in the external layer. The internal and external passages or breaches are sufficiently sized to expel the gas $CO_2$ developed by the coffee inside, without increasing the internal pressure of the package beyond an acceptable point. This document also describes an embodiment that uses a focused $CO_2$ laser beam together with a material formed by a layer of polypropylene or polyethylene and a sealant as internal portion, an EVOH barrier and an external layer of PET (polyethylene terephthalate). The energy of the laser beam is preferentially absorbed in the EVOH layer when emitted through the PE layer from the inside of the package or the PET layer from the outside of the package. When processed from the outside of the package, the print or dye in the film on the outside of the package may absorb and interfere with the laser engraving operation. Depending on the material and application, even the creation of a channel in the EVOH film can compromise the barrier property of the film, unless a second barrier layer is added as in the valve of the sealing film extending over the channel's passages or breaches. In addition, this layer thus obtained can also act as a valve for the sealing film.

Document US2017/247159 describes a flexible multilayer laminate with an integrated unidirectional pressure relief valve for use in a sealed container for packaging gas-producing products. The flexible laminate with valve comprises an underlying layer with a sealing layer and a barrier layer, and a first oriented polymeric layer which is laminated to said underlying layer substantially over the entire extension of the laminate by means of adhesive. At least one through perforation is provided through the first oriented polymeric layer, the adhesive and the underlying layer, comprising the sealing layer and the barrier layer.

Document US2003/185948 describes methods, apparatuses and products obtained therefrom by processing and packaging under reduced oxygen conditions to substantially decontaminate and prolong the shelf life of perishable goods, such as beef.

All known solutions mentioned above are not hermetic, but always provide for a passage, at least momentary, of air and other between the inside and outside and vice versa, through valves, vents and suchlike. This limits their use to a few particular applications, such as in the case of roasted coffee bean packaging for example.

There is therefore a lack of a solution that allows to overcome the limits of the state of the art, offering a medium barrier laminate that, if necessary, is easily recyclable in the flow of polyolefins and that allows to make packages that are hermetic and consequently safer, preventing the passage of contaminants inside the package and therefore avoiding the contamination of the product.

There is therefore the need to perfect a barrier film, a medium gas barrier laminate and corresponding package for food products, and a method for producing the barrier film, laminate and package that can overcome at least one of the disadvantages of the state of the art.

The Applicant has devised, tested and embodied the present invention to overcome the shortcomings of the state of the art and to obtain these and other purposes and advantages.

SUMMARY OF THE INVENTION

The present invention is set forth and characterized in the independent claims, while the dependent claims describe other characteristics of the present invention or variants to the main inventive idea.

Some embodiments described here concern a polyolefin-based multilayer barrier film comprising one or more polyolefin layers combined with at least one barrier layer, at least the barrier layer having a plurality of through holes. Other embodiments described here concern a method for making a polyolefin-based multilayer barrier film comprising combining one or more polyolefin layers with at least one barrier layer, a plurality of through holes being made at least on the barrier layer.

Other embodiments concern a polyolefin-based multilayer barrier film comprising polyolefin layers combined with at least one barrier layer, wherein only the barrier layer has a plurality of through holes, while the polyolefin layers are without through holes. The aforementioned polyolefin layers close the aforementioned at least one barrier layer on one side and on the other. In this way, the holes do not communicate with the outside and therefore there is no passage route through the multilayer barrier film.

Other embodiments described here concern a method for producing a polyolefin-based multilayer barrier film comprising combining polyolefin layers with at least one barrier layer, wherein a plurality of through holes is made only on the barrier layer, while the polyolefin layers have no through holes.

Other embodiments described here concern a medium gas barrier laminate comprising one or more polymeric, in particular polyolefin, films without through holes, combined with at least one multilayer barrier film according to the present description.

Other embodiments described here concern a method for producing a medium gas barrier laminate comprising combining one or more polymeric, in particular polyolefin, films without through holes, with at least one multilayer barrier film according to the present description.

Other embodiments described here concern a medium gas barrier package, in particular for food products, produced using a laminate according to the present description.

Other embodiments also concern a medium gas barrier laminate comprising polymeric, in particular polyolefin, films without through holes combined with at least one polyolefin-based multilayer barrier film comprising polyolefin layers combined with at least one barrier layer, wherein both the polyolefin layers and also the at least one barrier layer have a plurality of through holes. The above polymeric films close the at least one polyolefin-based multilayer barrier film on one side and on the other.

In possible embodiments, which can be combined with all the embodiments described here, it can be provided that the distribution of the through holes in the at least one barrier layer and in the one or more polyolefin layers is such that no passage route is created through the multilayer barrier film.

Other embodiments described here concern a laminate for a medium gas barrier package, in particular for food products, the laminate having high gas barrier properties and comprising at least one high barrier film and one or more polymeric sealing films, the laminate having at least one through aperture, a closing flap being present made of polymeric material of the same nature as the material of the one or more sealing films and applied on the through aperture in a stable manner.

Other embodiments described here concern a method for producing a laminate for a medium gas barrier package, in particular for food products, comprising making available a laminate comprising at least one high barrier film combined with one or more polymeric sealing films, making at least one through aperture in the laminate and applying a closing flap, made of polymeric material of the same nature as the material of the one or more sealing films, on the through aperture in a stable manner.

Other embodiments described here concern a medium gas barrier package, in particular for food products, comprising a closed wrapping, able to contain one or more food products and made by means of a laminate with high gas barrier properties and comprising at least one high barrier film and one or more polymeric sealing films, the wrapping having at least one through aperture which defines a window able to put the external environment in communication with the inside of the wrapping, a closing flap being present made of polymeric material of the same nature as the material of the one or more sealing films and applied on the through aperture in a stable manner.

The embodiments described here allow to produce multilayer films, laminates, packages and packaging of the hermetic type, in which there is no passage of air, not even momentary, between the inside and the outside of the package. Doing so makes the packages decidedly safer, not allowing the passage of germs inside the package and therefore preventing any potential contamination of the product.

DESCRIPTION OF THE DRAWINGS

These and other aspects, characteristics and advantages of the present invention will become apparent from the following description of some embodiments, given as a non-restrictive example with reference to the attached drawings wherein:

- fig. 1 is a permeation process diagram;
- fig. 2 is a graph of the positioning of plastic films on the market in relation to barrier classes;
- fig. 3 represents examples a), b), c), d), e), f), g) of perforation patterns that can be used in the embodiments described here;
- fig. 4 is a schematic representation of an example of a triplex medium barrier laminate made using a perforated co-extruded multilayer barrier film according to embodiments described here;
- fig. 5 is a schematic representation of an example of a triplex medium barrier laminate made using a perforated coated multilayer barrier film according to other embodiments described here;
- fig. 6 is a schematic representation of an example of a triplex medium barrier laminate made using a semi-perforated co-extruded multilayer barrier film according to other embodiments described here;
- fig. 7 is a schematic representation of an example of a triplex medium barrier laminate made using a semi-perforated coated multilayer barrier film according to other embodiments described here;
- fig. 8 is a schematic representation of an example of a co-extruded multilayer barrier film that can be used to obtain the embodiments described here;
- fig. 9 is a schematic representation of another example of a coated multilayer barrier film that can be used to obtain the embodiments described here;
- fig. 10 is a schematic representation of a flow pack package made according to the embodiments described here; and
- fig. 11 is a schematic representation of a tray package made according to the embodiments described here.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

DESCRIPTION OF SOME EMBODIMENTS

With reference to the attached drawings, some embodiments of a polyolefin-based multilayer barrier film (indicated with reference number 12, 112, 212, 312 in the various embodiments described here) comprising one or more polyolefin layers 20, 120, 220, 320 combined with at least one barrier layer 18, 118, 218, 318, at least the barrier layer having a plurality of through holes 15, 115, 215, 315, are described here.

The polyolefin-based multilayer barrier film 12, 112, 212, 312 described here can be used coupled to other films 14, 114, 214, 314 and/or 16, 116, 216, 316 in order to make a medium gas barrier laminate 10, 100, 200, 300 useful for the production of packages or packaging, for example for the food industry.

The polyolefin-based multilayer barrier film 12, 112, 212, 312 according to the embodiments described here is therefore provided with a barrier layer 18, 118, 218, 318 which by its nature would be a "high" barrier; however, according to the embodiments described here, its barrier performance is reduced, intentionally and in a controlled manner, that is, making it "semipermeable". This effect is achieved through a selective and appropriate opening at least of the barrier layer itself, that is, by creating the through holes 15, 115, 215, 315. Advantageously, the combination of this barrier layer 18, 118, 218, 318 with one or more polyolefin layers 20, 120, 220, 320 can be provided, so as to obtain the polyolefin-based multilayer barrier film 12, 112, 212, 312. Depending on the variants described here, it can be provided to open the barrier layer and also the aforementioned one or more polyolefin layers, or the barrier layer only. The opening, in both cases, can take place, for example, by means of perforation or similar or equivalent processing able to make the aforementioned through holes, as explained below. In the first case, an open or perforated polyolefin-based multilayer barrier film can be obtained; in the second case, a semi-open or semi-perforated polyolefin-based multilayer barrier film can be obtained, as better explained below.

The polyolefin-based multilayer barrier film 12, 112, 212, 312 thus obtained can be associated with other materials, as explained above, to make a medium gas barrier laminate 10, 100, 200, 300.

The polyolefin-based multilayer barrier film 12, 112, 212, 312 thus obtained can also be easily recyclable in the flow of polyolefin materials, also based on the nature of the materials used.

As is known, the techniques usually used to obtain a medium gas barrier laminate or film normally provide to start from a permeable material and try, through known techniques described above, to improve its barrier, with the limits highlighted.

In contrast, the embodiments described here adopt a counter-intuitive approach with respect to the prior art, in which approach a barrier layer is provided that normally has high barrier performance and that is processed to deliberately and selectively reduce its barrier effect, in order to increase its permeability in a suitable and controlled manner.

There are various methods for creating the openings of the barrier, that is, to obtain the aforementioned plurality of through holes in the barrier layer, for example: laser (perforation, cutting, abrasion), mechanical (perforation with hot or cold needles, cutting with knives, abrasion) or also mono-axial type or biaxial type (simultaneous or sequential) mechanical stretching, machine direction orientation (MDO) or transverse direction orientation (TDO, also with grooved rollers). Other methods known to a person of skill in the art can be used.

Among the methods mentioned, laser perforation offers, for example, great advantages: maximum flexibility, working repeatability and limited energy consumption. In particular, gas ($CO_2$) source lasers lend themselves well to the opening operation on the plastic films in question. Alternatively, other types of lasers can be usefully used, such as Nd:YAG, Diode, Eximer and more, as known to a person of skill in the art.

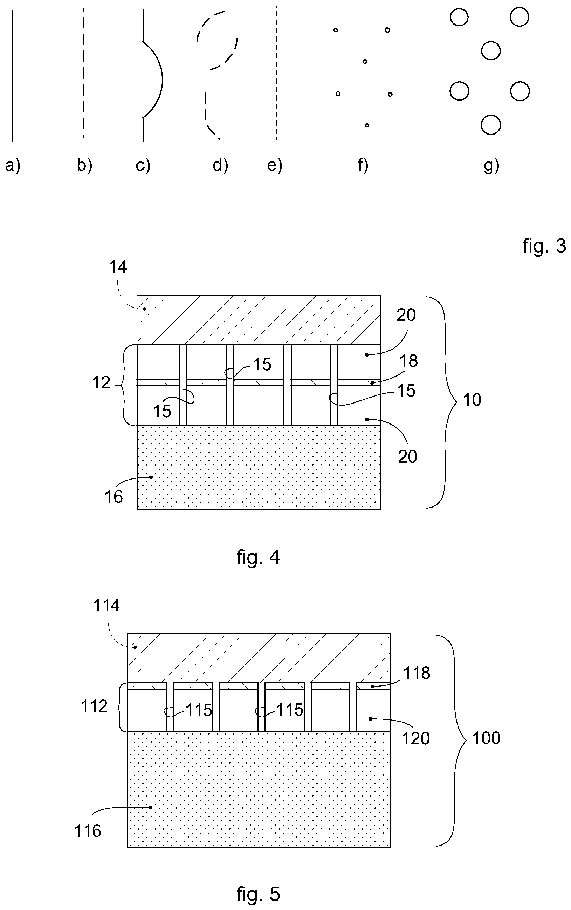

The patterns for working the through holes made in the barrier layer can be of different types, as shown for example in fig. 3: a) downweb scoring, b) downweb intermittent scoring, c) pattern scoring, d) pattern intermittent scoring, e) downweb micro-perforating, f) pattern micro-perforating, g) pattern hole cutting.

Of course, a simple perforation of the multilayer film, while offering the possibility of greatly increasing its permeability to gases, does not allow to easily and intentionally limit it to medium values, due to current technological limits. In addition, the opening of through holes in the film would preclude its application in many sectors where the problems of potential contamination of the product are essential and would limit its use to applications such as, for example, IV range fruits and vegetables.

Surprisingly, the Applicant has found that a high- or very high-barrier barrier layer, suitably and selectively opened, for example perforated, and included in a polyolefin-based multilayer barrier film as described here that is selectively and uniformly opened (by opening only the barrier layer or also the polyolefin layers of the same polyolefin-based multilayer barrier film), once coupled to one or more additional polyolefin layers, for example low barrier, while not excluding the possibility of coupling to polyolefin layers, for example medium or high barrier, provided they are not open (that is, they do not have holes), allows to obtain a laminate that overall reaches a medium barrier level. The laminate thus obtained guarantees at the same time the hermeticity of the package and, ultimately, its suitability for packaging food products and more. Furthermore, if at least the barrier layer and the other constituent layers of the multilayer barrier film described here are suitably chosen from polyolefin materials, the multilayer barrier film thus made will be recyclable and therefore ideal for achieving the aims of recycling in the polyolefins flow.

In some embodiments, described in detail below with reference, for example, to embodiments by means of co-extrusion, the production of the polyolefin-based multilayer barrier film can contemplate that the barrier layer is associated, as mentioned, with one or more polyolefin layers that can generally be made from polymeric layers associated with adhesive layers, also called "tie layers".

The polyolefin materials that can be used in the embodiments described here to make the one or more polyolefin layers 20, 120, 220, 320 can be chosen, by way of example, from polymeric resins or from mixtures of polymeric resins such as: PE homopolymers such as: low density polyethylene (LDPE), linear low density polyethylene (LLDPE), metallocene linear low density polyethylene (m-LLDPE), linear very low density polyethylene (VLDPE), linear ultra-low density polyethylene (ULDPE), medium density polyethylene (MdPE), high density polyethylene (HDPE), ultra-high molecular weight polyethylene (UHWDPE), and ethylene copolymers such as: ethylene vinyl acetate (EVA), ethylene butyl acrylate (EBA), ethylene methyl acrylate (EMA), ionomers (ION), EAA, EMAA, EVOH, also PP homopolymers (HOMO), and PP copolymers such as random copolymers (RAC), random heterophasic copolymers (HERACO), and also metallocene PP (PP), thermoplastic polyolefin (PBP), elastomeric polyolefin (POE), polybutene-1 (PB-1), Poly(4-methylpentane-1), cyclic olefin copolymers (COC) and corresponding copolymers.

The materials with which to make the above mentioned one or more tie-layers can be for example polyolefin polymers grafted with maleic anhydride (MAH-PE, MAH-PP) or with glycidyl methacrylate (GMA-PE), or mixtures thereof.

The organic materials with which to make the above mentioned one or more barrier layers can for example be resins such as, for example, ethylene vinyl alcohol (EVOH), polyvinyl alcohol (PVOH), polyacrylamide (MXD6), or mixtures thereof. The possibility of also using, for example, inorganic barrier materials, for example silicon, alumina or aluminum, or combinations thereof, or of combining such inorganic barrier materials with the aforementioned resins, is not excluded.

In some embodiments, both the one or more polyolefin layers 20, 120, 220, 320 and also the at least one barrier layer 18, 118, 218, 318 have a plurality of through holes 15, 215, 315 (see for example figs. 4 and 5). Generally, these through holes are common holes made through the one or more polyolefin layers and the at least one barrier layer. It is not excluded that the holes may not be shared between the one or more polyolefin layers and the at least one barrier layer.

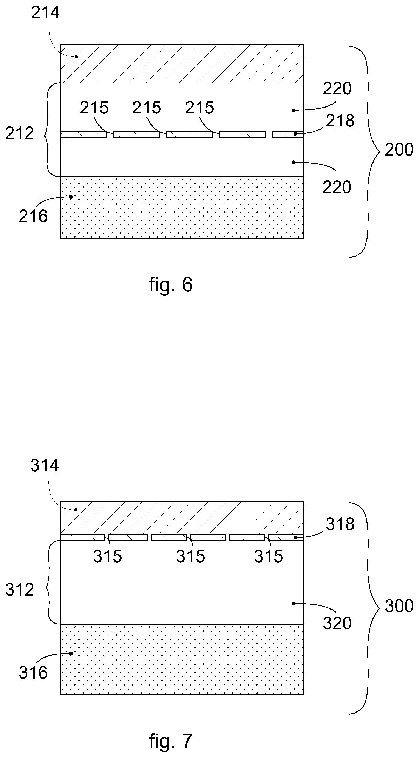

In other embodiments, only the barrier layer 18, 118, 218, 318 has a plurality of through holes 15, 115, 215, 315, while the one or more polyolefin layers 20, 120, 220, 320 are without through holes (see for example figs. 6 and 7).

In some embodiments, if several polyolefin layers 20, 120, 220, 320 are present, the barrier layer 18, 118, 218, 318 is between the polyolefin layers.

In some embodiments, which can be combined with all the embodiments described here, the distribution of the through holes 15, 115, 215, 315 of the barrier layer 18, 118, 218, 318 and of the polyolefin layers 20, 120, 220, 320 can possibly be such that no passage route is created through the perforated co-extruded multilayer barrier film 12, 112, 212, 312.

In these embodiments, therefore, the through holes 15, 115, 215, 315 can for example be made in the barrier layer 18, 118, 218, 318 and in the polyolefin layers 20, 120, 220, 320 in such a way that there is no passage through the perforated co-extruded multilayer barrier film 12, 112, 212, 312, for example by making such through holes 15, 115, 215, 315 distributed on the surface of the barrier layer 18, 118, 218, 318 and of the polyolefin layers 20, 120, 220, 320 in a suitable manner or in any case not aligned.

In some embodiments (see for example figs. 4, 6, 8), the barrier layer 18, 218 can be a barrier layer based on EVOH or PVOH, or combinations thereof, co-extruded with the one or more polyolefin layers 20, 220. For example, the barrier film embodiments described using figs. 4, 6 and 8 can be produced starting from a barrier film obtained by means of bubble, cast, calendar or water quench co-extrusion technology, obtaining a co-extruded barrier film formed by a barrier layer 18, 218 and one or more polyolefin layers 20, 220.

In some embodiments, each of the polyolefin layers 20, 120, 220, 320 includes one or more polymeric layers based on PP or PE, or combinations thereof, and one or more adhesive, or sealing, layers consisting of tie-layers, for example based on PP or PE, possibly grafted with maleic anhydride.

In other embodiments (see figs. 5, 7, 9, for example), the barrier layer 118, 318 is a barrier layer based on an inorganic deposition of silicon, alumina or aluminum, or combinations thereof, on a support layer based on PP or PE, possibly combined with an additional barrier layer based on EVOH or PVOH, or combinations thereof. For example, the barrier film embodiments described using figs. 5, 7 and 9 are made starting from a barrier film obtained by means of coating technology, depositing a barrier layer 118, 318 on one or more polyolefin layers 120, 320.

In some embodiments, which can be combined with all the embodiments described here, the aforementioned medium barrier is defined by an oxygen transmission coefficient O2TR between 2 and 500 cm$^3$/m$^2$ day atm, in particular between 5 and 100 cm$^3$/m$^2$ day atm, more in particular between 10 and 50 cm$^3$/m$^2$ day atm, measured according to regulation ASTM F 1927-07 at experimental conditions of 23°C and 50 % RH.

In some embodiments, which can be combined with all the embodiments described here, the aforementioned high barrier is defined by an oxygen transmission coefficient O2TR lower than 2 cm$^3$/m$^2$ day atm.

In some embodiments, the percentage by weight of barrier layer 18, 118, 218, 318 with respect to the total weight of the laminate 10, 100, 200, 300 is less than 10% by weight, in particular less than 5% by weight.

In some embodiments, the plurality of through holes 15, 115, 215, 315 is for example obtained through mechanical or laser perforation, or mechanical stretching or other, as for example indicated in detail above with reference to the methods for creating the barrier opening.

As described above, the embodiments of polyolefin-based multilayer barrier film 12, 112, 212, 312 can be conveniently used both to make monofilm, and also to make laminates, in particular a duplex laminate or a triplex laminate, or even a laminate formed by more than three layers, for example four, five or even more.

In the case of triplex laminate, it can include the polyolefin-based multilayer barrier film 12, 112, 212, 312, a top film 14, 114, 214, 314, and a bottom film 16, 116, 216, 316. The triplex laminate can be printed or anonymous. If printed, the top film 14, 114, 214, 314 can be a printing film while the bottom film 16, 116, 216, 316 can be a sealing film. For example, the printed triplex laminate can have the structure: printing film/barrier film/sealing film. In the event the triplex laminate is anonymous, the top film 14, 114, 214, 314 can be an unprinted external film while the bottom film 16, 116, 216, 316 can be a sealing film; for example, its structure can be external film/barrier film/sealing film.

In the case of a duplex laminate, it can include the polyolefin-based multilayer barrier film 12, 112, 212, 312 and a film 14, 114, 214, 314 or 16, 116, 216, 316; the latter can for example typically be a sealing film. If the duplex laminate is anonymous, that is, without printing, its structure can be barrier film/sealing film. If the duplex laminate is printed, its structure can be external print/barrier film/sealing film, or barrier film/internal print/sealing film.

In order to confirm the advantages that the present invention achieves, the Applicant has subjected a simple duplex laminate, consisting of an aluminum foil, suitably and selectively opened, for example perforated, and then coupled to a LLDPE film, to experimental tests. This embodiment is thus better described: a 100 $\mu$m aluminum foil (ALU) (very high barrier), adhesively coupled to a 40 $\mu$m LLDPE sealing film (low barrier). Before coupling, the aluminum foil is perforated with a variable number of holes of different diameter, as described heretofore. Table 1 below shows the oxygen permeability (O2TR) data measured according to regulation ASTM F 1927-07 at experimental conditions of 23°C and 50% RH with the MOCON 2/21 MH-L instrument for the ALU foil (before being perforated) and the LLDPE film.

Table 1

| Layer | Thickness ($\mu$m) | O2TR [$cm^3/m^2$ day atm] |
|---|---|---|
| ALU Foil | 100 | 0.1 |
| LLDPE Film | 40 | >3000 |

The ALU foil was perforated with a density of holes and diameters as per the example reported in Table 2 for seven different perforated ALU foil samples.

Table 2

| ALU foil sample | Hole diameter (mm) | Hole density [n of holes/5cm$^2$] |
|---|---|---|
| ALU1 | 1.2 | 1 |
| ALU2 | 1.2 | 3 |
| ALU3 | 1.2 | 5 |
| ALU4 | 1.2 | 10 |
| ALU5 | 0.3 | 1 |
| ALU6 | 0.3 | 3 |
| ALU7 | 0.3 | 5 |

All these seven perforated ALU foils have a permeability value O2TR greater than 10,000 $cm^3/m^2$ day atm.
By coupling these ALU foil samples to the LLDPE film (where LAMn = ALUn foil / adhesive / LLDPE film), the permeability values O2TR reported in Table 3 below were measured.

Table 3

| Multilayer film sample | Thickness ($\mu$m) | O2TR [$cm^3/m^2$ day atm] |
|---|---|---|
| LAM1 | 140 | 128 |
| LAM2 | 140 | 211 |
| LAM3 | 140 | 189 |
| LAM4 | 140 | 840 |
| LAM5 | 140 | 16 |
| LAM6 | 140 | 20 |
| LAM7 | 140 | 35 |

It is evident that LAMS, LAM6 and LAM7 usefully have a medium level oxygen barrier, in accordance with the purposes set forth here.
Another advantage of the embodiments described here is that the oxygen permeability value is substantially independent of environmental humidity, unlike traditional barrier films based on PA or other polar resins, which often limits the possibility of using these traditional barrier films in applications where, during the packaging and life of the product, the latter comes into contact with very humid liquids or atmospheres, which would cause the barrier level to drop dramatically.
The Applicant considers it plausible that the same medium-level oxygen barrier behavior according to the embodiments described here is conceivable for other molecules of gasses that make up the modified atmosphere: $N_2$ and

$CO_2$.

An additional advantage of the embodiments described here is that permeability does not depend, in the first instance, on the thickness of the film itself, which allows to guarantee its functionality more universally.

Finally, even if the example above refers to oxygen permeability, the principle underlying the embodiments described here can be usefully exploited, by appropriately choosing the films and materials, also in the case of water vapor permeability (WVTR).

The above operating principle has been explored by the Applicant in other embodiments, described below, which allow to make medium barrier laminates, even mechanically recyclable, for example according to the CEFLEX guidelines.

According to some embodiments, described using figs. 4 and 5, the multilayer barrier film described here can have not only the barrier layer which has the aforementioned through holes, but also the one or more polyolefin layers combined therewith (these embodiments can for example be defined here as a "perforated" barrier film). For example, the through holes can be shared, passing through the barrier layer and also the one or more polyolefin layers.

For example, fig. 4 shows a triplex medium barrier laminate 10 made using a perforated co-extruded multilayer barrier film according to the embodiments described here. In this case, for example, the triplex medium barrier laminate 10 can include a perforated co-extruded multilayer barrier film 12, a top film 14, which can for example be a printed or unprinted (that is anonymous, with only a protective function) film, and a bottom film 16, for example a sealing film.

The perforated co-extruded multilayer barrier film 12 has through holes 15. It can include a barrier layer 18, for example made of EVOH, interposed between a pair of polyolefin layers 20. The polyolefin layers 20 can include for example PP or PE.

In these embodiments, the through holes 15 are made, as mentioned, through the barrier layer 18 and the polyolefin layers 20.

The top film 14 can for example be made of PP (for example BOPP), or PE (for example BOPE or MOPE).

The bottom film 16 can for example be made of PP (for example CPP), or PE.

An example of these embodiments described using fig. 4 provides to create the opening of the barrier by means of laser. For example, a co-extruded multilayer barrier film can be provided, produced with an extrusion technology such as for example, but not limited to, bubble, flat head, calendar or water quench, such as for example, but not limited to, a PP/EVOH/PP film, where EVOH is the barrier layer and PP are the polyolefin layers, the total thickness of which is comprised between 10 and 1000 $\mu$m, in particular between 20 $\mu$m and 500 $\mu$m. The perforation of this multilayer barrier film provides to open through holes 15 through the barrier layer and the polyolefin layers by means of laser processing. The through holes 15 can typically be, but are not limited to, circular in shape and with a diameter of between 10 $\mu$m and 1000 $\mu$m, in particular between 25 $\mu$m and 250 $\mu$m. For example, the holes 15 are distributed uniformly on the surface of the film, according to a "micro-perforation" model (fig. 3, f). The ratio between the open and the total area of the film is between 1:10 and 1:1000, in particular between 1:50 and 1:200, even more in particular between 1:75 and 1:125.

According to some embodiments, it can be provided to couple the perforated co-extruded multilayer barrier film 12 as described above to one or more non-perforated films 14, 16, obtaining a laminated product, or simply a laminate, 10 with medium gas barrier properties, useful for making packages or packaging for food products.

Such a laminate 10 can be coupled with the most diverse techniques known to a person of skill in the art. By way of a non-limiting example, we can mention solvent adhesive, solventless adhesive, extrusion-lamination and more.

The top film of the laminate 10 can be either printed or anonymous.

The laminate 10 thus made advantageously lends itself to the packaging of products in a modified atmosphere in flow pack packages, and also to packaging in trays (top and bottom).

Another example of embodiments of perforated multilayer barrier film described using fig. 5 provides a multilayer barrier film in which a coated polyolefin barrier film is perforated.

For example, fig. 5 shows a triplex medium barrier laminate 100 made using a perforated coated multilayer barrier film according to the embodiments described here. In this case, for example, the triplex medium barrier laminate 100 can include a perforated coated multilayer barrier film 112, a top film 114, which can for example be a printed or unprinted film, and a bottom film 16, for example a sealing film.

The perforated coated multilayer barrier film 112 has through holes 115. It can include a barrier layer 118 deposited on a polyolefin layer 120. The polyolefin layer 120 can be for example made of PP (BOPP or MOPP) or PE (BOPE or MOPE).

For example, it can be provided that the perforated coated multilayer barrier film 112 described here is an oriented polyolefin barrier film.

In these embodiments, the through holes 15 are made through the barrier layer 118 and the polyolefin layer 120, as described above.

The top film 14 can for example be made of PP (for example BOPP), or PE (for example BOPE or MOPE).

The bottom film 116 can for example be made of PP (for example CPP), or PE.

For example, the perforated coated multilayer barrier film 112 according to these embodiments can be an oriented polyolefin barrier film in which one or more polyolefin layers are present, combined with a barrier layer 118, for example, silicized, aluminized, metallized, PVOH lacquered, or co-extruded with EVOH, PVOH. As a non-limiting example, silicized (SiOx), aluminized (Al2Ox), metallized or PVOH lacquered BOPP films, or co-extruded with EVOH, PVOH. This barrier film is subjected to perforation (for example by means of laser processing).

This perforated coated multilayer barrier film 112 can also be favorably coupled to other layers or films 114, 116 to give a laminate.

In this additional example, the opening of the multilayer barrier film can conveniently occur during the lamination step, in particular between the unwinding of the barrier film and its coupling to the remaining materials of the laminate. As a non-limiting example, in the case of laminating with a "triplex" type coupling machine, the perforation can be performed by interposing a laser unit before the coupling unit. The advantage of this solution lies in the possibility of deciding and customizing the barrier level as well as its pattern as a function of the specific needs of the end customer and its application.

According to other embodiments, described using figs. 6 and 7, the multilayer barrier film described here can have only the barrier layer which has the aforementioned through holes, while the one or more polyolefin layers combined therewith do not have holes (these embodiments can for example be defined here as a "semi-perforated" barrier film).

For example, fig. 6 shows a triplex medium barrier laminate 200 made using a "semi-perforated" co-extruded multilayer barrier film according to the embodiments described here. In this case, for example, the triplex medium barrier laminate 200 can include a semi-perforated co-extruded multilayer barrier film 212, a top film 214, which can for example be a printed or unprinted film, and a bottom film 216, for example a sealing film.

The embodiments described using fig. 6 represent another example of embodiments of semi-perforated barrier film in which a polyolefin-based multilayer film is provided analogous to that described using fig. 4, in which however only the opening of the barrier layer of the polyolefin barrier film, and not of the entire barrier film, is advantageously realized.

The semi-perforated co-extruded multilayer barrier film 212 according to the embodiments described using fig. 6 can include a barrier layer 218, for example made of EVOH, interposed between a pair of polyolefin layers 220. The polyolefin layers 220 can include for example PP or PE.

In these embodiments, the through holes 215 are made only through the barrier layer 218, while the polyolefin layers 220 are without through holes.

The top film 214 can for example be made of PP (BOPP o MOPP), or PE (BOPE or MOPE).

The bottom film 216 can for example be made of PP (for example CPP), or PE.

An example of these other embodiments described using fig. 6 therefore provides a semi-perforated co-extruded multilayer barrier film 212 in which only the barrier layer 218 is perforated.

This film, for example, can be obtained by means of a calibrated processing of the multilayer film to obtain the perforation only in the barrier layer 218 and by not opening the other layers 220 of the co-extrudate, with technologies such as, for example, but not limited to:

- using a laser in combination with some specific masterbatches (MB) capable of interacting with laser light, which, added in the barrier layer 218 during the production of the film, allow for the laser to open only the barrier layer and not all the other layers;
- using an orientation process, such as MDO and/or TDO for example, in combination with suitable fillers or resins in the barrier layer 218 so that, during the orientation process, micro channels are formed in the barrier layer, but not in all the other layers.

This in order to obtain the perforation only in the barrier 218 (see for example fig. 6). Therefore, not opening the other layers of the co-extrudate, indicated with 212. Another embodiment provides to make a semi-perforation obtained by means of a calibrated processing of the multilayer film using the laser to perforate an external polyolefin layer, up to and including the barrier layer 218, but not beyond, in such a way as to open the barrier, but not the film completely.

It should be noted that the embodiments of the semi-perforated co-extruded multilayer barrier film 212 advantageously allow to make films and laminates that are certainly suitable for contact with food, even using only duplex rather than triplex laminates, or even monofilm using the multilayer film described here with external printing plus overprint paint, or even in the case of applications without printing, using only the film according to the embodiments described here.

In some embodiments, which can be combined with all the embodiments described here, the polyolefin layers of the multilayer barrier film according to the embodiments described here can be made for example of PP but can also be conveniently made by replacing the PP with PE.

In accordance with other embodiments described using fig. 7, there is provided a triplex medium barrier laminate 300 made using a semi-perforated multilayer barrier film according to the embodiments described here. In this case, for example, the triplex medium barrier laminate 300 can include a semi-perforated coated multilayer barrier film 312, a top film 314, which can for example be a printed or unprinted film, and a bottom film 316, for example a sealing film.

The embodiments described using fig. 7 represent another example of embodiments of semi-perforated coated barrier film, similarly to fig. 6, in which an oriented polyolefin-based multilayer film is provided analogous to that described using fig. 5, in which however only the opening of the barrier layer of the coated polyolefin barrier film, and not of the entire barrier film, is advantageously realized.

The semi-perforated coated multilayer barrier film 312 according to the embodiments described using fig. 7 can include a barrier layer 318 on a polyolefin layer 320. The polyolefin layer 320 can be for example made of PP or PE.

For example, it can be provided that the semi-perforated coated multilayer barrier film 312 described here is an oriented polyolefin barrier film.

In these embodiments, the through holes 315 are made only through the barrier layer 318, while the polyolefin layer 320 is without through holes.

The top film 314 can for example be made of PP (BOPP o MOPP), or PE (BOPE or MOPE).

The bottom film 316 can for example be made of PP (for example CPP), or PE.

For example, the semi-perforated coated multilayer barrier film 312 according to the embodiments described here can be an oriented polyolefin barrier film in which one or more polyolefin layers are present, combined with a deposited barrier layer 318, for example, silicized, aluminized, metallized, PVOH lacquered, or co-extruded with EVOH, PVOH. As a non-limiting example, silicized (SiOx), aluminized (Al2Ox), metallized or PVOH lacquered BOPP films, or co-extruded with EVOH, PVOH. This barrier film is subjected to perforation (for example by means of laser processing).

This semi-perforated coated multilayer barrier film 312 can also be favorably coupled to other layers or films 314, 316 to give a laminate.

Also in this additional example, the opening of the barrier film can occur as described with reference to the embodiments described for example using fig. 6.

The Applicant has subjected the embodiments of the perforated and semi-perforated multilayer barrier film described here according to the possible alternatives to comparative experimental tests, taking into consideration the following films and the following laminates, shown in Table 4 and Table 5, respectively.

Table 4

| Film | Description |
| --- | --- |
| PP1 | printing support PP film |
| PP2 | PP barrier film co-extruded with EVOH (code E7/459) 40 $\mu$m, perforated (pattern code P1010) |
| PP3 | sealing PP film for flow pack |
| PP4 | sealing PP film for tray top |
| PP5 | support PP film |
| PP6 | PP barrier film co-extruded with EVOH (code E7/459) 200 $\mu$m, semi-perforated (pattern code SP1010) |
| PP7 | sealing PP film for tray bottom |

Table 5

| Laminate according to the present description | Description |
| --- | --- |
| LAM5 | PP1 20 $\mu$m / PP2 40 $\mu$m / PP3 40 $\mu$m |
| LAM9 | PP1 20 $\mu$m / PP2 40 $\mu$m / PP3 30 $\mu$m |
| LAM10 | PP5 100 $\mu$m / PP6 200 $\mu$m / PP7 100 $\mu$m |

For example, the laminate LAM8 can be usefully used for the MAP packaging of products in flow pack packages, while LAM9 (top) together with LAM10 (bottom) can be used for the MAP packaging of products in trays.

The Applicant has compared these laminates according to the embodiments described here with the following laminates present on the market (Table 6).

Table 6

| Comparative laminate | Description |
| --- | --- |
| COMP1 | BOPP 20 $\mu$m / BOPA 15 $\mu$m / PE 55 $\mu$m |
| COMP2 | PAP 30 $\mu$m / BOPA 15 $\mu$m / PP 50 $\mu$m |
| COMP3 | BOPA 15 $\mu$m / PE 65 $\mu$m |
| COMP4 | PAP 30 $\mu$m / BOPA 15 $\mu$m / PP 50 $\mu$m |

(continued)

| Comparative laminate | Description |
|---|---|
| COMP5 | PET 12 $\mu$m / PE 65 $\mu$m |
| COMP6 | PP 100 $\mu$m / PETG 200 $\mu$m / PP 100 $\mu$m |
| COMP7 | PETG 200 $\mu$m / PE 50 $\mu$m |

In Table 6, BOPP stands for biaxially oriented PP, while BOPA stands for biaxially oriented PA. The laminates COMP1, COMP2 are used for the MAP packaging of products in flow pack packages, while COMP3 is typically used for anonymous bags. The laminates COMP4 and COMP5 (top) together with COMP6 and COMP7 (bottom) are used for packaging in trays.

The values of permeability O2TR measured and the mechanical recyclability according to the CEFLEX guidelines are shown in Table 7 below, from which it can be seen that the laminates according to the present description achieve optimal medium barrier values (permeability O2TR) in line with the purposes set forth here, in conjunction with the recyclability in the recycling flow of polyolefins.

Table 7

| Laminate sample | Thickness ($\mu$m) | O2TR [$cm^3/m^2$ day atm] | Recyclability |
|---|---|---|---|
| LAM 8 | 100 | 29 | Yes |
| LAM9 | 90 | 27 | Yes |
| LAM10 | 400 | 34 | Yes |
| COMP1 | 90 | 30 | No |
| COMP2 | 95 | 34 | No |
| COMP3 | 80 | 39 | No |
| COMP4 | 95 | 33 | No |
| COMP5 | 77 | 30 | No |
| COMP6 | 400 | 28 | No |
| COMP7 | 250 | 33 | No |

It is evident that the inventive laminates LAMS, LAM9, LAM 10 advantageously lend themselves to packaging products in a modified atmosphere into flow pack packages and to packaging in trays, also being mechanically recyclable in the flow of polyolefins by virtue of the choice of materials.

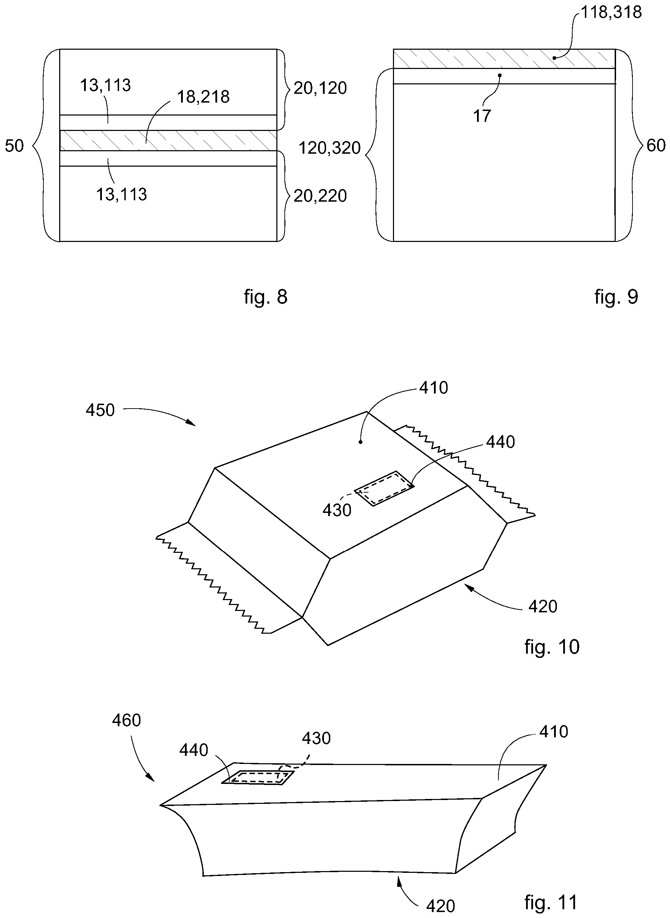

Figs. 8 and 9 are used to describe example embodiments of barrier films 50, 60, in particular high barrier according to the definition provided in the present description, which can be used to make a polyolefin-based multilayer medium barrier film according to the embodiments described here. These examples of barrier film are described here by way of a non-limiting example, and it is understood that their barrier can be conveniently opened, by means of one or more of the techniques described above, in order to obtain the through holes 15, 115, 215, 315 described above, for example to obtain a polyolefin-based multilayer medium barrier film defined here as "perforated" (see for example figs. 4 and 5) or "semi-perforated" (see for example figs. 6 and 7).

For example, with reference to fig. 8, a co-extruded multilayer barrier film 50 is described which includes a barrier layer 18, 218 and two polyolefin layers 20, 220, provided with two adhesive or sealing layers 13 ("tie-layer") combined with the barrier layer 18, 218. The barrier layer 18, 218 and the layers 20, 220 are, for example, of the type described with reference to figs. 4 and 6. This co-extruded multilayer barrier film 50 can be opened, for example by means of perforation, through its entire thickness by making through holes 15, as for example described with reference to fig. 4, or it can be opened only through the barrier layer by making through holes 215 as for example described with reference to fig. 6. In fig. 8 this opening is not shown.

Continuing by way of example, with reference to fig. 9, a coated multilayer barrier film 60 is described that includes a barrier layer 118, 318 and a layer 120, 320 combined with the barrier layer 118, 318 by means of a layer of adhesive primer 17. On top of the barrier layer 118, 318 there can for example be a protective coating, for example a protective paint, not shown. The barrier layer 118, 318 and the layer 120, 320 are, for example, of the type described with reference to figs. 5 and 7. This coated multilayer barrier film 60 can be opened, for example by means of perforation, through its entire thickness by making through holes 115, as for example described with reference to fig. 5, or it can be opened only through the barrier layer by making through holes 315, as for example described with reference to fig. 7. In fig. 9 this opening is not shown.

The Applicant, considering the intuition of providing a suitably perforated high or very high barrier layer, that is, one which is selectively and uniformly opened in a controlled manner, which is coupled to one or more polyolefin layers, even low barrier, allowing to obtain a multilayer film which, when used to make a laminate, overall reaches a medium barrier level according to the embodiments described using figs. from 4 to 7, has also conceived and embodied another aspect of the present disclosure, which concerns a laminate for making a package, whether it is for example a flow pack 450 (for example fig. 10) or a tray 460 (fig. 11), or other types of containers.

In accordance with these other embodiments, described using figs. 10 and 11, a laminate 410 can be provided for a medium gas barrier package, in particular for food products, the laminate having high gas barrier properties and comprising at least one high barrier film and one or more polymeric sealing films, the laminate having at least one through aperture 430. There is a closing flap (or "patch") 440 made of polymeric material of the same nature as the material of the one or more sealing films and applied on the through aperture 430 in a stable manner. In this way, the laminate overall has medium gas barrier properties.

In essence, to make the laminate according to these embodiments, a high barrier laminate 410 is made available, consisting of a multilayer film containing at least one high barrier film and a sealing film.

Furthermore, a permeable sealing film is made available, of the same quality or nature as the sealing film used for the laminate 410, in particular of the same material.

Thereafter, the through aperture 430 is made to define a suitable window in the laminate 410, for example by means of laser processing, mechanical punching or other suitable technique known to a person of skill in the art.

Furthermore, a closing flap (or "patch") 440 is prepared, obtained from the permeable sealing film of the same quality or nature as the sealing film used for the laminate 410, of suitable size and shape, suitable to cover the window created by the through aperture 430 in the laminate 410.

Finally, the closing flap 440 is applied, for example by means of ultrasonic welding or other suitable technique known to a person of skill in the art, in the zone of the window created by the through aperture 430 in the laminate 410.

Consequently, in accordance with these embodiments described, a medium gas barrier package (for example flow pack 450 or tray 460) can be provided, in particular for food products, comprising a closed wrapping 420, able to contain one or more food products and made by means of a laminate 410 with high gas barrier properties and comprising at least one high barrier film and one or more polymeric sealing films. The wrapping 410 has at least one through aperture 430 defining a window able to put the external environment in communication with the inside of the wrapping 410. There is a closing flap (or "patch") 440 made of polymeric material of the same nature as the material of the one or more sealing films and applied on the window defined by the through aperture 430 in a stable manner.

In these embodiments, the application of the closing flap 440 can, for example, conveniently take place during, or shortly before, the packaging step. As a non-limiting example, in the case of packaging with vertical FFS (Form Fill and Seal) machines, between the step of unwinding the laminate and before the forming collar. In these embodiments, the opening of the barrier is essentially realized in the zone of the aforementioned flap, by virtue of its permeability properties.

In the embodiments described using figs. 10 and 11, the sealing polymeric layers which can be used for the laminate 410 and also for the closing flap 440 can be chosen from the materials already described above with reference, for example, to the polyolefin layers 20, 120, 220, 320. Furthermore, the high barrier film of the laminate 410 can for example be made as explained with reference to the barrier layers 18, 118, 218, 318 of the embodiments described using figs. 4-9.

It is clear that modifications and/or additions of parts or steps may be made to the films, the laminates, the packages and the corresponding production methods as described heretofore, without thereby departing from the field and scope of the present invention, as defined by the claims.

It is also clear that, although the present invention has been described with reference to some specific examples, a person of skill in the art will be able to achieve other equivalent forms of films, laminates, packages and corresponding production methods, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Polyolefin-based multilayer barrier film comprising polyolefin layers (220) combined with at least one barrier layer (218), wherein only said barrier layer (218) has a plurality of through holes (215) while said polyolefin layers (220) are without through holes.

2. Film as in claim 1, wherein said polyolefin layers (220) include one or more polymeric layers based on PP or PE, or combinations thereof, and one or more adhesive, or sealing, layers consisting of tie-layers, based on PP or PE grafted with maleic anhydride.

3. Film as in claim 1 or 2, wherein said barrier layer (218) is a barrier layer based on EVOH or PVOH, or a combination thereof, co-extruded with said one or more polyolefin layers (220).

4. Film as in any claim from 1 to 3, wherein said barrier layer (218) is a barrier layer based on an inorganic deposition of silicon, alumina or aluminum, or a combination thereof, on a PP or PE based support layer, possibly combined with an additional barrier layer based on EVOH or PVOH, or a combination thereof.

5. Film as in any claim hereinbefore, wherein said plurality of through holes (215) is obtained through mechanical or laser perforation, or mechanical stretching.

6. Method for producing a polyolefin-based multilayer barrier film which comprises combining polyolefin layers (220) with at least one barrier layer (218), wherein a plurality of through holes (215) is created only on said barrier layer (218), while said polyolefin layers (220) are without through holes.

7. Medium gas barrier laminate comprising one or more polymeric, in particular polyolefin, films (214, 216) without through holes combined with at least one multilayer barrier film (212) as in any claim from 1 to 5.

8. Medium gas barrier laminate as in claim 7, wherein said medium barrier is defined by an oxygen transmission coefficient O2TR between 2 and 500 $cm^3/m^2$ day atm, in particular between 5 and 100 $cm^3/m^2$ day atm, more in particular between 10 and 50 $cm^3/m^2$ day atm.

9. Medium gas barrier laminate as in claim 7 or 8, wherein the percentage by weight of barrier layer (218) of said multilayer barrier film (212) with respect to the total weight of said laminate is less than 10% by weight, in particular less than 5%.

10. Method for producing a medium gas barrier laminate which comprises combining one or more polymeric, in particular polyolefin, films without through holes with at least one multilayer barrier film as in any claim from 1 to 5.

11. Medium gas barrier package, in particular for food products, produced using a laminate as in claim 7, 8 or 9.

12. Medium gas barrier laminate comprising polymeric, in particular polyolefin, films (14, 16) without through holes combined with at least one polyolefin-based multilayer barrier film (12) comprising polyolefin layers (20) combined with at least one barrier layer (18), wherein both said polyolefin layers (20) and also said at least one barrier layer (18) have a plurality of through holes (15).

13. Medium gas barrier laminate as in claim 12, wherein said medium barrier is defined by an oxygen transmission coefficient O2TR between 2 and 500 $cm^3/m^2$ day atm, in particular between 5 and 100 $cm^3/m^2$ day atm, more in particular between 10 and 50 $cm^3/m^2$ day atm.

14. Medium gas barrier laminate as in claim 12 or 13, wherein the percentage by weight of barrier layer (18) of said multilayer barrier film (12) with respect to the total weight of said laminate is less than 10% by weight, in particular less than 5%.

15. Method for producing a medium gas barrier laminate which comprises combining polymeric, in particular polyolefin, films (14, 16) without through holes with at least one polyolefin-based multilayer barrier film (12) comprising polyolefin layers (20) combined with at least one barrier layer (18), wherein both said polyolefin layers (20) and also said at least one barrier layer (18) have a plurality of through holes (15).

16. Medium gas barrier package, in particular for food products, produced using a laminate as in claim 12, 13 or 14.

fig. 1

fig. 2

fig. 3

fig. 4

fig. 5

fig. 6

fig. 7

fig. 8

fig. 9

fig. 10

fig. 11

Europäisches
Patentamt

European
Patent Office

Office européen
des brevets

# EUROPEAN SEARCH REPORT

**Application Number**

EP 24 18 6478

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/190144 A1 (ITO HIROYUKI [JP]) 6 July 2017 (2017-07-06)<br>* paragraph [0003] *<br>* paragraph [0019] *<br>* paragraph [0036] - paragraph [0040] *<br>* paragraph [0050] - paragraph [0055] *<br>* figures 3,4 * | 1-16 | INV.<br>B32B3/26<br>B32B7/12<br>B32B27/08<br>B32B27/30<br>B32B27/32<br>B65D65/40 |
| X | US 2023/114239 A1 (GREFENSTEIN ACHIM [DE] ET AL) 13 April 2023 (2023-04-13)<br>* paragraph [0038] - paragraph [0040] *<br>* paragraph [0047] - paragraph [0052] *<br>* figure 4 * | 1-16 | |
| X | US 2009/130438 A1 (NASSI ALDO [IT] ET AL) 21 May 2009 (2009-05-21)<br>* paragraph [0003] *<br>* paragraph [0060] - paragraph [0067] *<br>* paragraph [0085] *<br>* paragraph [0100] *<br>* figure 3 * | 1-16 | |
| X | WO 2019/148058 A1 (LASERSHARP FLEXPAK SERVICES LLC [US]) 1 August 2019 (2019-08-01)<br>* paragraph [0004] *<br>* paragraph [0057] *<br>* paragraph [0065] *<br>* claims 1, 12 * | 1-16 | TECHNICAL FIELDS SEARCHED (IPC)<br><br>B32B<br>B65D |

The present search report has been drawn up for all claims

| Place of search | Date of completion of the search | Examiner |
|---|---|---|
| The Hague | 13 November 2024 | Sanchez Perucha, A |

## ANNEX TO THE EUROPEAN SEARCH REPORT
## ON EUROPEAN PATENT APPLICATION NO.

EP 24 18 6478

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2024

| Patent document cited in search report | Publication date | Patent family member(s) | | Publication date |
|---|---|---|---|---|
| US 2017190144 A1 | 06-07-2017 | JP | 2017121948 A | 13-07-2017 |
| | | US | 2017190144 A1 | 06-07-2017 |
| US 2023114239 A1 | 13-04-2023 | AT | 522884 A4 | 15-03-2021 |
| | | AU | 2020430816 A1 | 22-09-2022 |
| | | BR | 112022013793 A2 | 13-09-2022 |
| | | CA | 3167548 A1 | 26-08-2021 |
| | | CN | 115103765 A | 23-09-2022 |
| | | EP | 4076944 A1 | 26-10-2022 |
| | | EP | 4169707 A1 | 26-04-2023 |
| | | ES | 2967139 T3 | 26-04-2024 |
| | | JP | 2023514272 A | 05-04-2023 |
| | | PL | 4076944 T3 | 08-04-2024 |
| | | US | 2023114239 A1 | 13-04-2023 |
| | | WO | 2021164913 A1 | 26-08-2021 |
| US 2009130438 A1 | 21-05-2009 | AT | E490078 T1 | 15-12-2010 |
| | | CA | 2642279 A1 | 30-08-2007 |
| | | EP | 1820642 A1 | 22-08-2007 |
| | | EP | 1993834 A1 | 26-11-2008 |
| | | ES | 2357368 T3 | 25-04-2011 |
| | | US | 2009130438 A1 | 21-05-2009 |
| | | WO | 2007096925 A1 | 30-08-2007 |
| | | ZA | 200806879 B | 24-06-2009 |
| WO 2019148058 A1 | 01-08-2019 | CN | 111902343 A | 06-11-2020 |
| | | EP | 3743347 A1 | 02-12-2020 |
| | | JP | 7515404 B2 | 12-07-2024 |
| | | JP | 2021511270 A | 06-05-2021 |
| | | JP | 2024036365 A | 15-03-2024 |
| | | US | 2019221140 A1 | 18-07-2019 |
| | | WO | 2019148058 A1 | 01-08-2019 |

EPO FORM P0459

For more details about this annex : see Official Journal of the European Patent Office, No. 12/82

## REFERENCES CITED IN THE DESCRIPTION

**Patent documents cited in the description**

- US 5278282 A
- EP 0644230 A
- EP 1311599 A
- US 5506036 A
- EP 0934160 A
- EP 0320757 A
- DE 3938552
- DE 4223864 A1
- EP 0575855 A1
- US 9005514 B2
- WO 2016109023 A
- US 2017190144 A
- US 2020122904 A
- US 2017247159 A
- US 2003185948 A

**Non-patent literature cited in the description**

- **FELDMAN, D.** Polymer Barrier Films. Springer, 2001, vol. 9
- The Potential Use of Polymer-Clay Nanocomposites in Food Packaging. **RAY, SUDIP**. International Journal of Food Engineering. The Berkley Electronic Press, 2006, vol. 2
- Multilayer Packaging in Circular Economy. **SCHMIDT, JANNICK.** Polymers. MDPI, 2022, vol. 14, 1825
- Recycling of Polymer-based Multilayer Packaging: A Review. **KAISER, KATHARINA**. Recycling. MDPI, 2018, vol. 3, 1
- A review on pyrolysis of plastic waste. **ADNISA, FAISAL.** Energy conversion and management. Elsevier, 2016, vol. 115, 308
- Designing for a Circular Economy. CEFLEX, June 2020